# EUROPEAN PATENT APPLICATION

(11) **EP 0 753 424 A1**
(43) Date of publication of application: **15.01.1997**
(21) Application number: 95913378.6
(22) Date of filing: 29.03.1995
(51) Int. Cl.: B60K 17/10, F15B 11/00

(54) **TRAVELLING HYDRAULIC DEVICE**

(30) Priority: 29.03.1994 JP 58845/94
(71) Applicant: KOMATSU LTD., Minato-ku Tokyo 107 (JP)
(72) Inventor: IKEI, Kazunori, Oyama Factory of Kabushiki Kaisha, Oyama-shi, Tochigi-ken 323 (JP); TAKA, Keisuke, Oyama Factory of Kabushiki Kaisha, Oyama-shi, Tochigi-ken 323 (JP)
(74) Representative: Steinmeister, Helmut, Dipl.-Ing.
(86) International application number: JP9500600
(87) International publication number: WO9526277

(57) **Abstract**

A travelling hydraulic device characterized in that left and right direction change-over values are provided for supplying pressure oil to left and right travelling hydraulic motors, that a spool hole having a pump port, an actuator port and a return port is formed in a first valve body, a spool for establishing and cutting off communications between the respective ports being fitted in the spool hole to thereby constitute the left direction change-over valve, that a spool hole having a pump port, an actuator port and a return port is formed in a second valve body, a spool for establishing and cutting off communications between the respective ports being fitted in the spool hole to thereby constitute the right direction change-over valve, that a spool hole having an inlet port and tank port is formed in a third valve body, a spool for establishing and cutting off communications between the respective ports being fitted in the spool hole to thereby constitute a switch valve by providing pressure receiving chambers at ends of the spool and that the first and second valve bodies are connected to the third valve body so as to establish communications between the respective return ports and the inlet port to thereby introduce a negative pressure of the left and right travelling hydraulic motors into the both pressure receiving chambers.

## Description

### TECHNICAL FIELD

The present invention relates to a hydraulic system for traveling for supplying a pressurized fluid discharged from a single hydraulic pump to left and right traveling hydraulic motors in a crawler type working vehicle, such as a power shovel or so forth.

### BACKGROUND ART

As power shovel, there has been known one, in which a vehicle body is mounted on a traveling body in pivotal fashion by means of a pivoting hydraulic motor, a boom, an arm and a bucket are mounted on the vehicle body for vertical swing motion by means of a boom cylinder, an arm cylinder and a bucket cylinder, respectively, and the traveling body is a crawler type for driving left and right crawler by means of left and right traveling hydraulic motor.

As a hydraulic circuit for supplying a discharged pressurized fluid of a single hydraulic pump to respective hydraulic actuators of such power shovel, there has been known one which includes a single variable displacement hydraulic pump being controlled a displacement so that a pressure difference between a load pressure of the hydraulic actuator and the pump discharge pressure becomes constant, a plurality of direction switching valves connected to a discharge side of the variable displacement hydraulic pump and supplying a pressurized fluid to respective hydraulic actuators, a plurality of pressure compensation valves respectively provided at the inlet sides of respective direction switching valves and each including a load check valve and a pressure reduction valve for thrusting the load check valve in closing direction with a pressure at the downstream side against the load pressure, as disclosed in Japanese Unexamined Patent Publication (Kokai) No. Heisei 4-244604, for example.

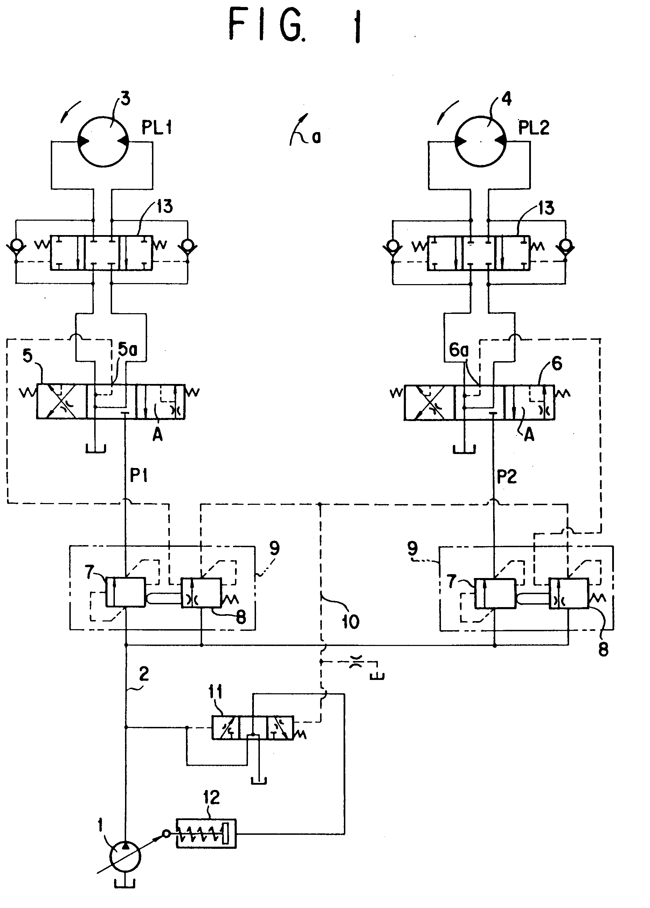

When the traveling hydraulic circuit is constructed with the hydraulic circuit, it will becomes as illustrated in Fig. 1. This performs control a displacement of a variable displacement pump so as to maintain a pressure difference between a load pressure and a pump discharge pressure by providing left and right direction switching valves 5 and 6 for supplying pressurized fluid to left and right traveling hydraulic motors 3 and 4 in a discharge passage of the variable displacement hydraulic pump, providing pressure compensation valves, each of which comprises a load check valve 7 and a pressure reduction valve 8 for thrusting the load check valve in closing direction by a pressure at the downstream side against the load pressure, respectively at inlet sides of the left and right direction switching valves 5 and 6, connecting load pressure detecting ports 5a and 6a of the left and right direction switching valves 5 and 6 to a pressure receiving portions of the pressure reduction valves 8 of respective pressure compensation valves 9, introducing the pressure at downstream side of the pressure reduction valves 8 to a displacement control valve 11 via a load pressure introduction passage 10, introducing the pump discharge pressure into a displacement control cylinder 12 via the displacement control valve 11. Thus, a meter-in pressure difference of the left and right direction switching valves 5 and 6 is controlled by respective pressure compensation valve 9. 13 denotes counter balance valves respectively provided between the left and right direction switching valves 5 and 6 and the left and right traveling hydraulic motors.

In such hydraulic circuit, left and right turn is performed by differentiating revolution speeds of the left and right traveling hydraulic motors by differentiating meter-in opening area of the left and right direction switching valves 5 and 6. However, upon turning, traveling speed is inherently lowered.

Namely, upon turning toward left or right, turning resistance becomes large. Then, the inner side traveling motor (turning circle inside) decreasing the revolution speed becomes braking state, in which a driving pressure becomes zero (or a set pressure of a counter balance valve), whereas the driving pressure of the outer side traveling motor (turning circle outside) increasing the revolution speed becomes high pressure corresponding to a traveling resistance and a turning resistance.

Therefore, a pressure difference between the inner traveling motor and the outer traveling motor becomes large, and in conjunction therewith, a flow of the pressurized fluid to the inner traveling motor causes energy loss. Normally, a horsepower control is then becomes active to lower the displacement of the variable displacement pump 1 to reduce flow rate to the outer traveling motor to lower the traveling speed.

For example, when turning toward a direction of arrow a by positioning the left and right direction switching valves 5 and 6 at right side positions A, making the meter-in opening area of the left direction switching valve 5 large and the meter-in opening area of the right direction switching valve 6 small, to place the left traveling hydraulic motor 4 on turning circle outside and the right traveling hydraulic motor 5 at turning circle inside, the right traveling hydraulic motor 4 becomes braking state. Then, a driving pressure PL2 of the right traveling hydraulic motor becomes the set pressure of the counter balance valve 13. Also, a driving pressure PL1 of the left traveling hydraulic motor becomes high pressure corresponding to the traveling resistance and turning resistance. Accordingly, the pressure reduction valve 8 of the pressure compensation valve 9 in the turning circle outside (left side) is thrust toward right by the load pressure PL1 to make the open degree of the load check valve large. On the other hand, the pressure reduction valve 8 of the pressure compensation valve 9 in the turning circle inside (right side) is thrust toward left by the load pressure PL1 concerning to the turning circle inside (left side) to push the load check valve 7 in closure side to make the open degree of the load check valve smaller. This open degree is inversely proportional to the pressure difference PL1 - PL2 of the driving pressure.

Therefore, when the meter-in open area of the right direction switching valve is significantly small to cause large pressure difference, the discharge pressure of the variable displacement hydraulic pump becomes large associated therewith. Thus, a horsepower constant control becomes active to reduce the displacement of the variable displacement hydraulic pump 1. As a result, the flow rate flowing into the traveling motor at the turning circle outside is reduced to lower the vehicle speed.

Therefore, the owner of the present application has prior application for a hydraulic circuit which can solve the problem as set forth above. The prior application has been published as Japanese Patent Unexamined Publication No. Heisei 6-241203.

Namely, this hydraulic circuit for traveling includes the variable displacement pump 1, the left and right traveling motors 3 and 4 for supplying the discharged pressurized fluid of the variable displacement pump 1 to the left and right direction switching valves 5 and 6, the displacement control valve 11 and a displacement control cylinder 12 for controlling the displacement of the variable displacement pump 1 so as to maintain a pressure difference between the load pressure and the pump discharge pressure constant, and pressure compensation valves 9 respectively provided at upstream sides of the left and right direction switching valves 5 and 6 and each having a load check valve 7 and a pressure reduction valve 8 thrusting the load check valve 7 toward closure side by the pressure at the downstream side against the load pressure. Return passages 21 and 22 of the left and right direction switching valves 5 and 6 are connected to an auxiliary relief valve 24 and a tank 25 via a switching valve 23, and the inlet side of the auxiliary relief valve 24 is connected to respective of upstream side circuits 28 and 29 of the left and right direction switching valves 5 and 6 via a circuit 26 and a check valve 27.

The switching valve 23 is maintained at a drain position B by a spring force and is switched between a left position C and a right position D by the pressurized fluid supplied to left and right pressure receiving portions 30 and 31. Namely, since the left and right pressure receiving portions 30 and 31 are connected to the load pressure detecting ports 5a and 6a of the left and right direction switching valves 5 and 6 via left and right circuits 32 and 33, the switching valve 23 is designed to be switched between the left and right positions upon occurrence of difference of the load pressures of the left and right traveling hydraulic motors 3 and 4.

With such hydraulic circuit for traveling, upon turning in the direction of arrow a by positioning the left and right direction switching valves 5 and 6 at right positions A, making the meter-in open area of the left direction switching valve 5 large and the meter-in open area of the right direction switching valve 6 small, placing the left traveling motor 3 at turning circle outside and the right traveling hydraulic motor 4 at turning circle inside, the right traveling hydraulic motor 4 becomes braking state. Then the driving pressure PL2 becomes set pressure of the counter balance valve 13. Also, the driving pressure PL1 of the left traveling hydraulic motor 3 becomes high pressure corresponding to the traveling resistance and turning resistance. Therefore, the inlet pressure P1 of the left direction switching valve 5 becomes higher than the inlet pressure P2 of the right direction control valve 6. Namely, the load pressure of the left traveling hydraulic motor 3 becomes higher than the load pressure of the right traveling hydraulic motor 4.

By this, the switching valve 23 is placed at the left position C by the load pressure acting on the left pressure receiving portion 30. Thus, the return passage 21 of the left direction switching valve 5 is connected to the inlet side of the auxiliary relief valve 24, and the return passage 22 of the right direction switching valve 6 is connected to the tank 25.

Accordingly, the inlet side of the auxiliary relief valve 24 is elevated up to a set pressure P3 to compensate a back pressure of the return passage 21. In conjunction therewith, the pressurized fluid flows into the upstream side circuit 29 of the right direction switching valve 6 via the circuit 26 and the check valve 27.

By this, the load check valve 7 at the turning circle inside is pushed toward the closure side to reduce the flow rate of the pressurized fluid flowing into the right traveling hydraulic motor 4 via the load check valve from the variable displacement hydraulic pump 1.

Therefore, large part of the discharged pressurized fluid of the variable displacement hydraulic pump 1 is supplied to the left traveling hydraulic motor 3. Thus, lowering of displacement of the variable displacement hydraulic pump 1 by the effect of horsepower constant control will not caused. Therefore, the flow rate to the left traveling hydraulic motor 3 at the turning circle outside will not be lowered so as not to lower the vehicle speed.

However, in such hydraulic circuit for traveling, a piping for supplying the return fluid from the left and right direction switching valves 5 and 6 to the switching valve 23 becomes necessary to make piping operation troublesome.

The present invention has been worked out for improving such drawback. It is an object of the present invention to provide a hydraulic system for traveling which can eliminate necessity of piping for supplying return fluid from the left and right direction switching valves to the switching valve.

### DISCLOSURE OF THE INVENTION

In order to accomplish the above-mentioned objects, according to one aspect of the invention, a hydraulic system for traveling having left and right direction switching valves for respectively supplying pressurized fluid to left and right traveling hydraulic motors, comprises:
the left direction switching valve constructed by forming a spool bore having a pump port, an actuator port and a return port in a first valve body, and disposing a spool for establishing and blocking communication of respective ports in the spool bore;
the right direction switching valve constructed by forming a spool bore having a pump port, an actuator port and a return port in a second valve body, and disposing a spool for establishing and blocking communication of respective ports in the spool bore;
the switching valve constructed by forming a spool bore having an in-flow port and a tank port in the third valve body, disposing a spool for establishing and blocking communication of respective ports in the spool bore for defining pressure receiving chambers at both end sides of the spool,
the first and second valve bodies being connected to the third valve body for communicating respective return ports with the in-flow port to introduce load pressures of the left and right traveling hydraulic motors to both on the pressure receiving chambers.

With the construction set forth above, by connecting the valve body of the switching valve with the valve bodies of the left and right direction switching valves, the return fluid flowing into the left and right direction switching valves can be directly flow into the switching valve. Therefore, it becomes possible to eliminate necessity of piping for supplying the return fluid from the left and right direction switching valves to the switching valve.

On the other hand, according to another aspect of the invention, a hydraulic system for traveling having left and right direction switching valves for respectively supplying pressurized fluid to left and right traveling hydraulic motors, comprises:
the left and right direction switching valves being constructed by forming a spool bore, to which a pump port, first and second actuator ports and first and second return ports are opened, in a valve body, disposing a spool in the spool bore, switching position among a neutral position where respective ports are blocked, a first position where the pump port and the first actuator ports are communicated and the second actuator port and the second return port are communicated, and a second position where the pump port is communicated with the second actuator port and the first actuator port is communicated with the first return port by sliding the spool;
a switching valve constructed by forming a passage and a spool bore, to which first and second in-flow ports and first and second tank ports are opened, in another valve body, disposing the spool in the spool bore, retaining the spool at a neutral position by means of springs, defining first and second pressure receiving chambers at both end sides of the spool for sliding the spool to a right position by a pressure in the first pressure receiving chamber and for sliding the spool to a left position by a pressure in the second pressure receiving chamber, communicating the first and second inflow ports to the first and second tank ports respectively at the neutral position of the spool, communicating the first in-flow port with the passage and communicating the second in-flow port with the second tank ports while the spool is placed at the left position, and communicating the first in-flow port with the first tank port and communicating the second in-flow port with the passage while the spool is placed at the right position,
on both sides of the valve body of the switching valve, the valve bodies of the left and right direction switching valves are coupled to communicate respective of the first and second return ports of the left direction switching valve to the first in-flow port and to communicate respective of the first and second return ports of the right direction switching valve to the second in-flow port to introduce a load pressure of the right traveling hydraulic motor to the first pressure receiving chamber and to introduce a load pressure of the left traveling hydraulic motor to the second pressure chamber.

In addition to the construction set forth above, it is desirable that the valve body of the switching valve is formed with a first and second pressure introducing ports, the first and second pressure introduction ports are communicated with the first and second pressure receiving chambers, the first pressure introduction port is connected to a load pressure detecting portion of the right control switching valves, and the second pressure introduction port is connected to a load pressure detecting portions of the left direction switching valves.

Also, it is preferred that first and second pistons are disposed in both end portions of the spool of the switching valve in longitudinal direction for defining the first and second pressure receiving chambers.

Furthermore, first and second pistons may be disposed in both end portions of the spool of the switching valve in longitudinal direction for defining the first and second pressure receiving chambers, first and second axial bores may be formed in the spool of the switching valve for communicating the first pressure introduction port with the first pressure receiving chamber via the first axial bore, and communicating the second pressure introduction port with the second pressure receiving chamber via the second axial bore.

In addition to the foregoing construction, the spool of the switching valve may be formed with a slit groove for communicating the first and second pressure introduction ports at the neutral position of the spool.

Furthermore, in addition to the constructions set forth above, an auxiliary relief valve communicating the passage to the second tank port a pair of check valves having first and second suction ports for respectively communicating the passage to the first and second suction ports, may be provided with the valve body of the switching valve, the first suction port may be directly communicated with the pump port of the left direction switching valve and the second suction port may be directly communication with the pump port of the right direction switching valve.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the present invention, but are for explanation and understanding only.

In the drawings:
Fig. 1 is a diagram of the conventional hydraulic circuit for traveling;
Fig. 2 is a diagram of another conventional hydraulic circuit for traveling;
Fig. 3 is a section of a left direction switching valve in one embodiment of a hydraulic system for traveling according to the present invention;
Fig. 4 is a section of a right direction switching valve of the foregoing embodiment;
Fig. 5 is a section of a switching valve of the foregoing embodiment;
Fig. 6 is a plan view showing a condition where the switching valve and the left and right direction switching valves are connected; and
Fig. 7 is an explanatory illustration showing communicating condition of respective ports of the left and right direction switching valves and the switching valve.

### BEST MODE FOR IMPLEMENTING THE INVENTION

The preferred embodiment of a hydraulic system for traveling according to the present invention will be discussed hereinafter with reference to the accompanying drawings.

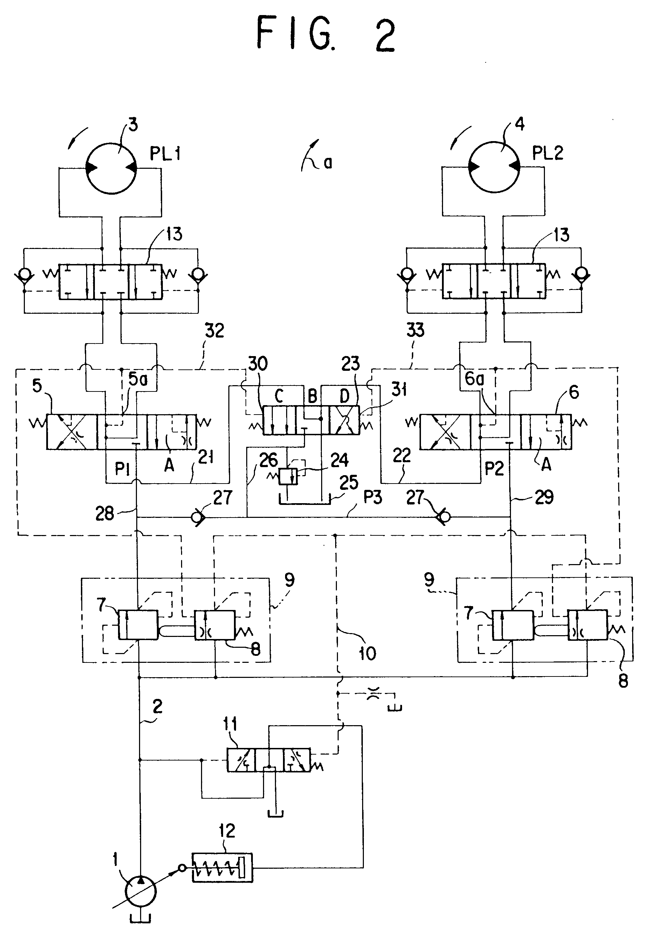

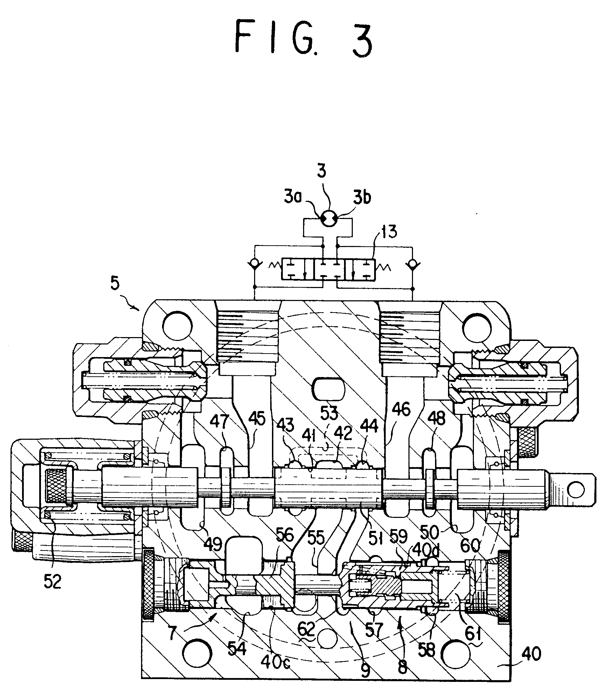

One embodiment of the present invention will be discussed with reference to Figs. 3 to 7. It should be noted that like elements as those in the prior art illustrated in Fig. 2 will be identified by like reference numerals and detailed description therefor will be neglected.

As shown in Fig. 3, a left direction switching valve 5 is formed with a spool bore 41 in a valve body 40. To the spool bore 41, a pump port 42, a first and second load pressure detecting ports 43 and 44, a first and second actuator ports 45 and 46, first and second return ports 47 and 48 and first and second tank ports 49 and 50 are formed. Respective of these ports are communicated and blocked by a spool 51 disposed in the spool bore. Then, a first actuator port 45 is connected to a forward port 3a of the left traveling hydraulic motor 3 via the counter balance valve 13, and a second actuator port 46 is connected to a reverse port 3b of the left traveling hydraulic motor 3 via the counter balance valve 13.

The spool 51 is maintained at a neutral position by means of a spring 52. When the spool 51 is in the neutral position, the pump port 42 and first and second load detecting ports 43 and 44 are blocked, the first actuator port 45, the first return port 47 and the first tank port are communicated, and also the second actuator port 46, the second return port 48 and the second tank port 50 are communicated.

The spool 51 is designed to be operated manually to be shifted to a first position and a second portion. When the spool 51 is shifted toward right to be placed at the first position, the pump port 42 is communicated with the first actuator port 45 via the second load pressure detecting port 44, a fluid conduit 53 and the first load pressure detecting port 43, the first actuator port 45 and the first return port 47 are blocked from communication, the second actuator port 46 is communicated with the second return port 48, and the communication between the second return portion 48 and the second tank port 50 is blocked.

When the spool is shifted toward left and is placed at the second position, the pump port 42 is communicated with the second actuator port via the first load pressure detection port 43, the fluid conduit 53 and the second load pressure detecting port 44, the communication between the second actuator port 46 and the second return port 48 is blocked, the first actuator port 45 is communicated with the first return port 47, and the communication between the first return port 47 and the first tank port 49 is blocked.

As shown in Fig. 3, in the valve body 40, a load check valve bore 40, to which an inlet port 54 and an outlet port 55 are opened, is formed. A spool 56 for establishing and blocking communication between the ports set forth above is disposed in the load check valve bore 40c to form the load check valve 7. On the other hand, in the valve body 40, a pressure reduction valve bore 40d, to which a first port 57 and a second port 58 are opened, is formed. A spool 59 for establishing and blocking communication between the ports set forth above is disposed in the pressure reduction valve bore 40d to form the pressure reduction valve 8. The spool 59 is thrust in a direction to block communication between the first port 57 and the second port 58 and to bias the spool 56 of the load check valve 7 toward the closure position by the pressure in a first pressure receiving chamber 61, and in other direction to establish communication between the first port 57 and the second port 58 and to be shifted away from the spool 56 of the load check valve 7 by the pressure in the second pressure receiving chamber 62.

The pump discharge passage 2 of the variable displacement hydraulic pump 1 is connected to the inlet port 54, the outlet port 55 is communicated with the pump port 42, the first port 57 is connected to the pump discharge passage 2 and the second port 58 is communicated with the first pressure receiving chamber 61 and the load pressure detecting passage 10.

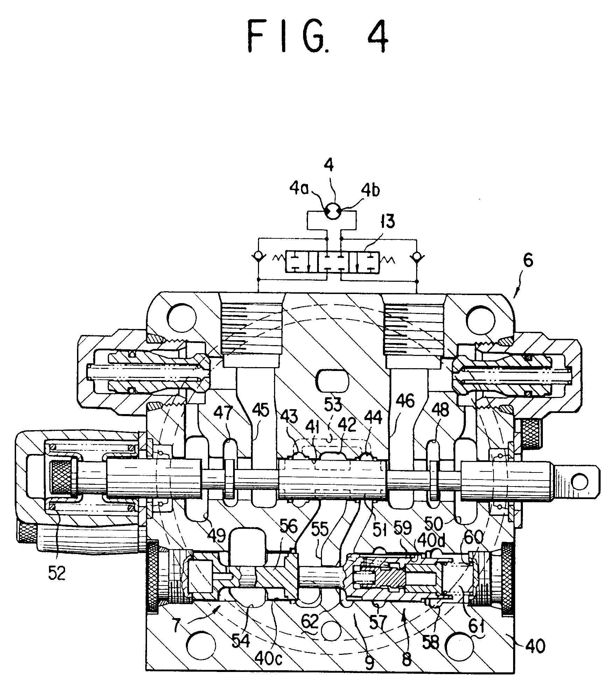

As shown in Fig. 4, the right direction switching valve 6 is the identical configuration to the left direction switching valve 5. The first actuator port 45 is connected to the forward movement port 4a of the right traveling hydraulic motor 4 via the counter balance valve 13. The second actuator port 46 is connected to the backward movement port of the right traveling hydraulic motor 4 via the counter balance valve 13.

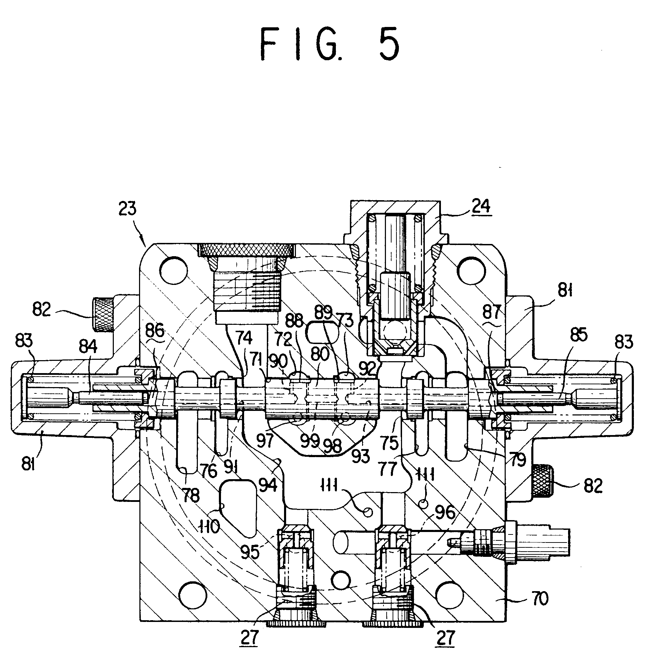

As shown in Fig. 5, the switching valve 23 has a valve body 70. In a spool bore 71 of the valve body 70, first and second pressure introduction ports 72 and 73, first and second ports 74 and 75, first and second in-flow ports 76 and 77 and first and second tank ports 78 and 79 are opened. These ports are communicated and blocked by a spool 80 disposed in the spool bore 71.

On left and right end faces of the valve body 70, spring cases 81 are mounted by means of bolts 82, respectively. By springs 83 housed within the spring cases 81, the spool 80 is retained at the neutral position.

When the spool 80 is maintained at the neutral position, the spool 80 blocks the first and second ports 74 and 75 from communication with the first and second in-flow ports 76 and 77, respectively, and establishes communication between the first and second in-flow ports 76 and 77 with the first and second tank ports 78 and 79, respectively.

At the both end portions of the spool 80 in the longitudinal direction, first and second pistons 84 and 85 are inserted to define a first pressure receiving chamber 86 and a second pressure receiving chamber 87, respectively. In the spool 80, a plurality of first and second slit grooves 88 and 89 respectively opening to the first and second pressure introduction ports 72 and 73 are formed in circumferentially spaced apart relationship. The first slit groove 88 is communicated with the first pressure receiving chamber 86 via a first orifice 90 and a first axial bore 91. The second slit groove 89 is communicated with the second pressure receiving chamber 87 via a second orifice 92 and a second axial bore 93.

When the pressurized fluid is supplied to the first pressure receiving chamber 86, the spool 80 is slide toward right to be placed at the right position. By this, the first in-flow port 76 is communicated with the first tank port 78. The second in-flow port 77 is communicated with the second port 75.

When the pressurized fluid is supplied to the second pressure receiving chamber 87, the spool 80 is slide toward left to be placed at the left position. By this, the first in-flow port 76 is communicated with the first port 74. The second in-flow port 77 is communicated with the second tank port 79.

The first port 74 and the second port 75 are communicated via a passage 94. The passage 94 is communicated with the second tank port 79 via the auxiliary relief valve 24 and with first and second suction ports 95 and 96 via the check valve 27.

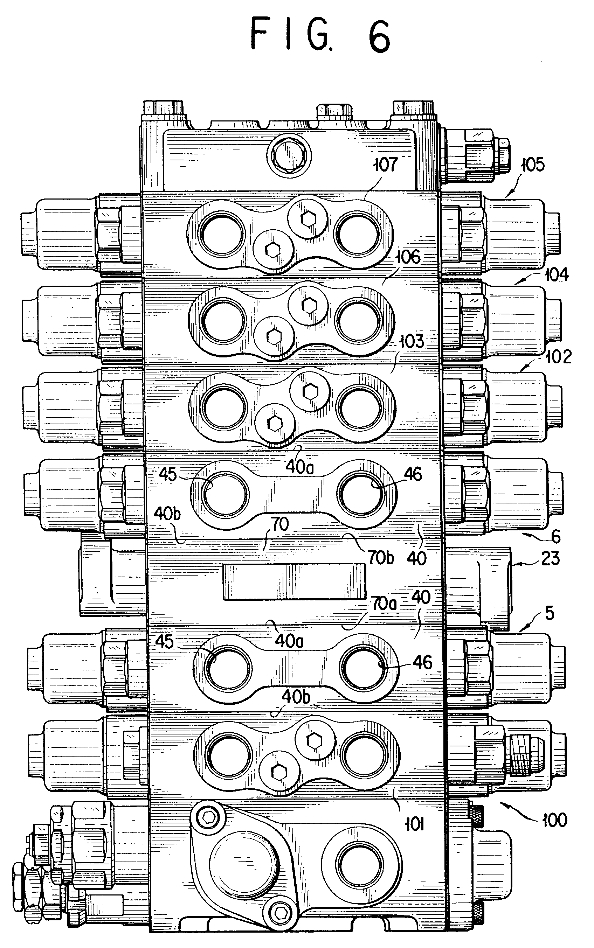

As shown in Fig. 6, on a first mating surface 70a of the valve body 70 of the switching valve 23, a first mating surface 40a of the valve body 40 of the left switching valve 5 is abutted and coupled. On a second mating surface 70b of the valve body 70 is abut to a second mating surface 40b of the valve body 40 of the right switching valve 6 is abutted and connected therewith.

As shown in Fig. 6, on the second mating surface 40b of the valve body 40 of the left direction switching valve 5, a valve body 101 of a direction switching valve 100 for turning is abutted and connected. On the first mating surface 40a of the valve body 40 of the right direction switching valve 6, a valve body 103 of a direction switching valve 102 for boom is abutted and connected. On the valve body 103, respective valve bodies 106 and 107 of a direction switching valve 104 for arm, and a direction switching valve 105 for bucket are sequentially abutted and connected.

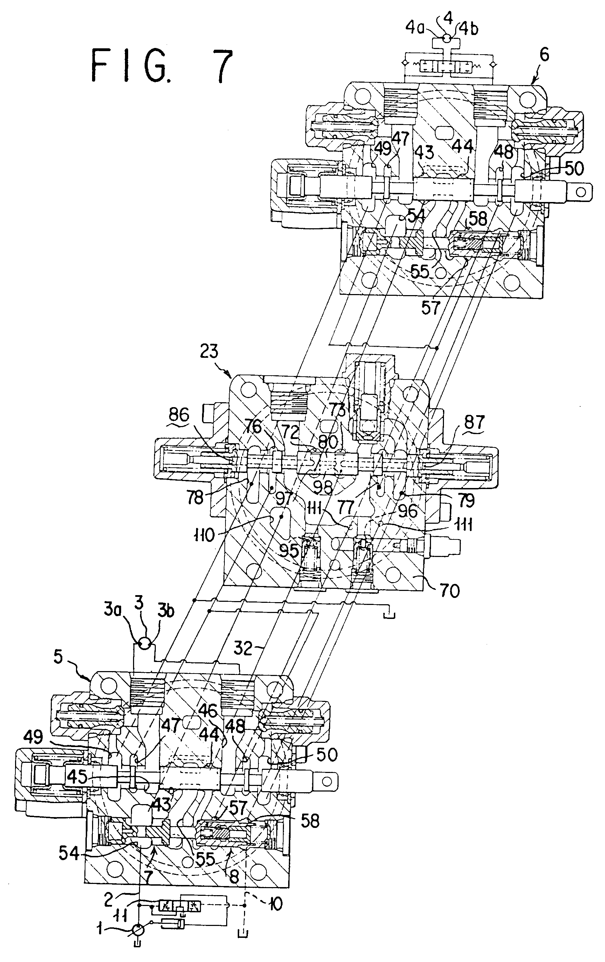

As shown in Fig. 7, the first tank port 78 of the switching valve 23 and the second tank port 79 open to the first and second mating surfaces 70a and 70b and thus are communicated with the first tank port 49 and the second tank port 50 of the left and right direction switching valves 5 and 6, respectively. The first in-flow port 76 is communicated with the first and second return ports 47 and 48 of the left direction switching valve 5, respectively. The second in-flow port 77 is communicated with the first and second return ports 47 and 48. The first pressure introduction port 72 of the switching valve 23 is communicated with the first load pressure detection port 43 of the right direction switching valve 6 with a port 97 opening to the second mating surface 70b. The second pressure introduction port 73 is communicated with the second load pressure detection port 44 of the left direction switching valve 5 with a port 98 opening to the first mating surface 70a. The first suction port 95 opens to the first mating surface 40a and is communicated with the outlet port 55 of the left direction switching valve 5. The second suction port 96 opens to the second mating surface 40b and is communicated with the outlet port 55 of the right direction switching valve 6.

The inlet ports 54 of the left and right direction switching valves 5 and 6 are communicated via the first communication port 110 of the valve body 70 of the switching valve 23. Similarly, the first port 57 and the second port 58 are also communicated via second and third communication ports 111 and 112.

Next, the operation of the foregoing embodiment will be discussed.

When the spool 51 of the left direction switching valve 5 is shifted toward right to be placed at the first position, the pressurized fluid is supplied to the forward port 3a of the left traveling hydraulic motor 3 from the first actuator port 45 of the left direction switching valve 5. The return fluid in the reverse port 3b is flows into the second return port 48 via the second actuator port 46 and flows into the first in-flow port 76 of the switching valve 23 from the second return port 48.

When the spool 51 of the right direction switching valve 6 is slide toward right to be placed at the first position, the pressurized fluid is supplied to the forward movement port 4a of the right traveling hydraulic motor 4 from the first actuator port 45. The return fluid in the backward movement port 4b flows into the second return port 48 via the second actuator port 46 and flows into the second in-flow port 77 of the switching valve 23 from the second return port 48.

Simultaneously, the pressure in the second load pressure detection port 44 of the left direction switching valve 4, namely the load pressure on the left traveling hydraulic motor 3, is introduced into the second pressure receiving chamber 87 via the second pressure introduction port 73. The pressure in the first load pressure detection port 43 of the right direction switching valve 6, namely the load pressure on the right traveling hydraulic motor 4 is introduced into the first pressure receiving chamber 86 via the first pressure introduction port 72.

At this time, if the load pressures in the left and right traveling hydraulic motors 3 and 4 equal to each other, the spool 80 of the switching valve 23 are placed at the neutral position. Then, the return fluid flowing into the first and second in-flow ports 76 and 77 flows out to the first and second tank ports 78 and 79. Namely, in Fig. 2, it becomes similar to the case where the switching valve 23 is placed at the neutral position.

On the other hand, when the load pressure in the left traveling hydraulic motor 3 is higher than the load pressure on the right traveling hydraulic motor 4, the spool 80 of the switching valve 23 is pushed toward left by the pressure in the second pressure receiving chamber 87 to be placed at the left position to establish communication between the first in-flow port 76 and the first port 74. Then, the return fluid from the left traveling hydraulic motor 3 flows into the passage 94 to flow to the outlet port 55 of the right direction switching valve 6 via the second suction port 96. Then, the second in-flow port 77 is communicated with the second tank port 79 to flow the return fluid from the left traveling hydraulic motor 3 to the tank via the second tank port 79. It becomes similar to the case where the switching valve 23 is placed at the left position C in Fig. 2.

On the other hand, when the load pressure on the right traveling hydraulic motor 4 is higher than the load pressure on the left traveling hydraulic motor 3, the spool 80 of the switching valve 23 is pushed toward right by the pressure in the first pressure receiving chamber 86 to be placed at the right position. Then, since the second in-flow port 77 is communicated with the second port 75, the return fluid from the right traveling hydraulic motor 4 flows into the passage 94 to flow into the outlet port 55 of the left direction switching valve 5 from the first suction port 95. At the same time, since the first in-flow port 76 is communicated via the first tank port 78, the return fluid from the left traveling hydraulic motor 3 flows to the tank from the first tank port 78. Thus, it becomes similar to the state where the switching valve 23 is placed at the right position D in Fig. 2.

As set forth above, by connecting the valve bodies 40 of the left and right direction switching valves 5 and 6 to the valve body 70 of the switching valve 23, the load pressure and the return fluid flows into the switching valve 23 to eliminate necessity of piping. Thus, the return fluid can be supplied to the upstream side of the left and right direction switching valves 5 and 6 from the switching valve 23 without piping.

On the other hand, since the first and second pressure receiving chambers 86 and 87 which pressures push the spool 80 of the switching valve toward left and right respectively are formed by inserting the first and second pistons 84 and 85 into the spool 80, the pressure receiving areas thereof become small to make the depression force of the spool 80 toward left and right smaller.

Namely, since the load pressures of the left and right traveling hydraulic motors 3 and 4 become high pressure, if the pressure acts on the overall end face of the spool 80, the force to depress the spool 80 become abnormally large, the springs to bias the spool 80 at the neutral position inherently become large. However, with the construction as in the shown embodiment, the spring 83 for biasing the spool 80 at the neutral position can be made smaller to permit to make the spring case 81 and the bolt 82 smaller. Therefore, the overall switching valve 23 can be made compact to be advantageous in mounting space (installation space) and cost.

In the spool 80 of the switching valve 23, a slit groove 99 for communicating the first and second pressure introduction port 72 and 73 when the spool 80 is in the neutral position is formed, as shown in Fig. 5. Accordingly, when the switching valve 23 is in the neutral position, namely when the load pressures of the left and right traveling hydraulic motors 3 and 4 are equal for straight traveling, the load pressures of the left and right traveling hydraulic motors 3 and 4 became equal by the effect of the slit groove 99 to improve straight traveling ability.

It should be noted that the first and second pressure introduction ports 72 and 73 may be communicated with the pump ports 42 of the left and right direction switching valves 5 and 6.

As set forth above, by connecting the valve body 40 of the left and right direction switching valves 5 and 6 to the valve body 70 of the switching valve 23, the return fluid flowing into the left and right direction switching valves 5 and 6 directly flow into the switching valve 23 to eliminate necessity of piping for supplying the return fluids from the left and right direction switching valves 5 and 6 to the switching valve 23.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A hydraulic system for traveling having left and right direction switching valves for respectively supplying pressurized fluid to left and right traveling hydraulic motors, comprising:
said left direction switching valve constructed by forming a spool bore having a pump port, an actuator port and a return port in a first valve body, and disposing a spool for establishing and blocking communication of respective ports in said spool bore;
said right direction switching valve constructed by forming a spool bore having a pump port, an actuator port and a return port in a second valve body, and disposing a spool for establishing and blocking communication of respective ports to said spool bore;
said switching valve constructed by forming a spool bore having an in-flow port and a tank port in the third valve body, disposing a spool for establishing and blocking communication of respective ports in said spool bore for defining pressure receiving chambers at both end sides of said spool,
said first and second valve bodies being connected to said third valve body for communicating respective return ports with said in-flow port to introduce load pressures on said left and right traveling hydraulic motors to both of said pressure receiving chambers.

2. A hydraulic system for traveling having left and right direction switching valves for respectively supplying pressurized fluid to left and right traveling hydraulic motors, comprising:
said left and right direction switching valves being constructed by forming a spool bore, to which a pump port, first and second actuator ports and first and second return ports are opened, in a valve body, disposing a spool in said spool bore, switching position among a neutral position where respective ports are blocked, a first position where said pump port and said first actuator ports are communicated and said second actuator port and said second return port are communicated, and a second position where said pump port is communicated with said second actuator port and said first actuator port is communicated with said first return port by sliding said spool;
a switching valve constructed by forming a passage and a spool bore, to which first and second in-flow ports and first and second tank ports are opened, in another valve body, disposing said spool in said spool bore, retaining said spool at a neutral position by means of springs, defining first and second pressure receiving chambers at both end sides of said spool for sliding said spool to a right position by a pressure in said first pressure receiving chamber and for sliding said spool to a left position by a pressure in said second pressure receiving chamber, communicating said first and second inflow ports to said first and second tank ports respectively at the neutral position of said spool, communicating said first in-flow port with said passage and communicating said second in-flow port with said second tank ports while said spool is placed at said left position, and communicating said first in-flow port with said first tank port and communicating said second in-flow port with said passage while the spool is placed at the right position,
on both sides of said valve body of said switching valve, the valve bodies of said left and right direction switching valves are coupled to communicate respective of said first and second return ports of said left direction switching valve to said first in-flow port and to communicate respective of said first and second return ports of said right direction switching valve to said second in-flow port to introduce a load pressure of said right traveling hydraulic motor to said first pressure receiving chamber and to introduce a load pressure of said left traveling hydraulic motor to said second pressure chamber.

3. A hydraulic system for traveling as set forth in claim 2, wherein said valve body of said switching valve is formed with a first and second pressure introducing ports, said first and second pressure introduction ports are communicated with said first and second pressure receiving chambers, said first pressure introduction port is connected to a load pressure detecting portion of said right control switching valves, and said second pressure introduction port is connected to a load pressure detecting portions of said left direction switching valves.

4. A hydraulic system for traveling as set forth in claim 2, wherein first and second pistons are disposed in both end portions of said spool of said switching valve in longitudinal direction for defining said first and second pressure receiving chambers.

5. A hydraulic system for traveling as set forth in claim 3, wherein first and second pistons are disposed in both end portions of said spool of said switching valve in longitudinal direction for defining said first and second pressure receiving chambers, first and second axial bores are formed in said spool of said switching valve for communicating said first pressure introduction port with said first pressure receiving chamber via said first axial bore, and communicating said second pressure introduction port with said second pressure receiving chamber via said second axial bore.

6. A hydraulic system for traveling as set forth in claim 3 or 5, wherein said spool of said switching valve is formed with a slit groove for communicating said first and second pressure introduction ports at the neutral position of said spool.

7. A hydraulic system for traveling as set forth in any one of claims 2 to 6, wherein an auxiliary relief valve communicating said passage to said second tank port are provided with said valve body of said switching valve, a pair of check valves having first and second suction port for respectively communicating said passage to said first and second suction ports, said first suction port is directly communicated with said pump port of said left direction switching valve and said second suction port is directly communication with said pump port of said right direction switching valve.
